# EUROPÄISCHE PATENTSCHRIFT

(11) **EP 2 288 854 B1**
(45) Veröffentlichungstag und Bekanntmachung des Hinweises auf die Patenterteilung: **08.08.2018**
(21) Anmeldenummer: 09768908.7
(22) Anmeldetag: 10.06.2009
(51) Int. Cl.: F24F 11/72, F16L 41/02, F24F 13/02, F24F 13/14

(54) **T-FÖRMIGES ABZWEIGSTÜCK, INSBESONDERE FÜR EIN LÜFTUNGSSYSTEM**
T-SHAPED BRANCH PART, PARTICULARLY FOR A VENTILATION SYSTEM
RACCORD EN T, EN PARTICULIER POUR UN SYSTÈME DE VENTILATION

(30) Priorität: 18.06.2008 DE 102008028613
(43) Veröffentlichungstag der Anmeldung: 02.03.2011
(73) Patentinhaber: Pluggit GmbH, 81829 München (DE)
(72) Erfinder: PFEIFFER, Georg, 81829 München (DE)
(74) Vertreter: Keil & Schaafhausen Patent- und Rechtsanwälte PartGmbB
(86) Internationale Anmeldenummer: PCT/EP2009/004153
(87) Internationale Veröffentlichungsnummer: WO 2009/156059

(56) Entgegenhaltungen:
- EP-A- 0 409 779
- EP-A- 1 582 822
- CH-A5- 598 549
- DE-A1- 3 218 165
- DE-U1-202005 007 613
- DE-U1-202006 004 839
- JP-A- 61 262 534
- JP-U- 55 026 210
- JP-U- 62 012 087

## Beschreibung

Die Erfindung betrifft ein T-förmiges Abzweigstück, insbesondere für ein Lüftungssystem, mit einem ersten Kanal mit einem ersten und einem diesem gegenüberliegenden zweiten Anschluss und mit einem von dem ersten Kanal im Wesentlichen senkrecht abzweigenden zweiten Kanal mit einem dritten Anschluss sowie mit einer Drosselklappeneinrichtung zur Veränderung des für eine Luftströmung zwischen dem ersten Kanal und dem zweiten Kanal zur Verfügung stehenden Strömungsquerschnitts in dem zweiten Kanal. Weiter betrifft die Erfindung ein Kanalstück sowie ein Lüftungssystem mit einem derartigen Kanalstück.

Aus der EP 1 582 822 A2 ist eine Regelklappe für ein T-förmiges Abzweigstück bekannt, wobei die Regelklappe zwei starr miteinander verbundene Regelklappenbereiche aufweist, die mit einer Achse schwenkbar verbunden sind, so dass die Regelklappenbereiche sich in zueinander unter einem spitzen Winkel verlaufenden Ebenen erstrecken. Die Schwenkachse der Regelklappe ist dabei am Fußpunkt des Abzweigstücks so angeordnet, dass ein Regelklappenbereich in der Öffnungsstellung der Regelklappe in den als ein Sammel- oder Verteilerrohr ausgebildeten ersten Kanal ragt, während der zweite Regelklappenbereich in dem zweiten Kanal angeordnet ist. Diese Geometrie und Anordnung der Regelklappe ist besonders günstig, um eine Strömung in einer bestimmten Richtung aus dem ersten Kanal in den zweiten Kanal zu leiten bzw. umgekehrt. Wenn dagegen die Strömung in dem ersten Kanal in entgegengesetzter Richtung verläuft, wird die Strömung in den zweiten Kanal bzw. aus dem zweiten Kanal durch die Geometrie und Anordnung der Regelklappe erschwert. Mit anderen Worten ist der Luftwiderstand einer Luftströmung stark davon abhängig, ob die Luftströmung zwischen dem ersten Anschluss des ersten Kanals und dem Anschluss des zweiten Kanals oder zwischen dem zweiten Anschluss des ersten Kanals und dem zweiten Kanal verläuft. Damit eignet sich das bekannte Abzweigstück insbesondere für solche Anwendungen, in denen eine definierte Strömungsrichtung in dem Abzweigstück vorgegeben ist

Auch aus der DE 198 54 795 C1 ist ein T-förmiges Abzweigstück mit einer Drosselklappe bekannt, bei welcher abhängig von der Strömungsrichtung in dem ersten Kanal der Luftwiderstand für eine Luftströmung zwischen dem ersten Kanal und dem davon abzweigenden zweiten Kanal bzw. umgekehrt unterschiedlich ist. Dies gilt auch für die einfachste Bauform von Drosselklappen, die beispielsweise bei einem kreisrunden Querschnitt des abzweigenden zweiten Kanals als eine kreisförmige Scheibe ausgestaltet sind, die um eine zentrale Schwenkachse beispielsweise um 90° zwischen einer vollständig geschlossenen und einer vollständig geöffneten Stellung verschwenkbar sind. Allenfalls in dieser vollständig geöffneten Stellung der Drosselklappe, in welcher diese parallel zu der Haupterstreckungsrichtung des abzweigenden zweiten Kanals ausgerichtet ist, wäre der Luftwiderstand unabhängig von der Strömungsrichtung in dem ersten Kanal, von welchem der zweite Kanal abzweigt. In allen übrigen Stellungen der Drosselklappe trifft dies dagegen nicht zu. JP 61 262534 A zeigt ein Kanalstück mit zwei synchron verstellbaren Drosselklappen.

Die Verwendung von bekannten Abzweigstücken in einem Lüftungssystem macht es erforderlich, dass vor dem Einbau des Abzweigstücks festgelegt wird, in welcher Richtung die Luftströmung durch das Abzweigstück erfolgen soll. Das Abzweigstück muss dann entsprechend richtig ausgerichtet eingebaut werden. Eine nachträgliche Änderung der Strömungsrichtung, beispielsweise indem ein vorhandener Kanal als eine Abluftleitung statt einer Zuluftleitung verwendet wird, ist dabei nicht ohne erhebliche Beeinträchtigungen hinsichtlich des Luftwiderstands möglich.

Aufgabe der vorliegenden Erfindung ist es demgegenüber, ein Kanalstück der eingangs genannten Art bereitzustellen, das besonders kompakt aufgebaut ist und bei welchem der versorgende Luftvolumenstrom weitgehend ungehindert von beiden Seiten in den Kanal ein- und ausströmen kann.

Diese Aufgabe wird erfindungsgemäß mit einem Kanalstück nach Anspruch 1 gelöst. Bei einem als Abzweigstück gestalteten Kanalstück ist die Drosselklappeneinrichtung derart gestaltet und angeordnet ist, dass der Luftwiderstand für eine Luftströmung aus dem ersten Anschluss in den dritten Anschluss gleich dem Luftwiderstand einer Luftströmung aus dem zweiten Anschluss in den ersten Anschluss. Es ist damit bei dem erfindungsgemäßen Abzweigstück unbeachtlich, welcher Anteil des abgehenden Volumenstromes aus welcher Richtung des versorgenden Volumenstromes zuströmt und in den zweiten Kanal einströmt. Der Luftwiderstand muss für die aus den beiden Richtungen zuströmenden Volumenströme nicht identisch sein, obwohl dies bevorzugt wird. Für das erfindungsgemäße Abzweigstück ist es ausreichend, wenn in jeder Position der Drosselklappeneinrichtung die Unterschiede in dem Luftwiderstand abhängig von der Strömungsrichtung weniger als etwa 10%, insbesondere weniger als etwa 5%, betragen.

Das erfindungsgemäße Abzweigstück ist durch diese Ausgestaltung der Drosselklappeneinrichtung universeller einsetzbar. So muss nicht bereits beim Einbau auf die spätere Strömungsrichtung innerhalb des Kanals Rücksicht genommen werden. Vielmehr ist es möglich, ein identisches Abzweigstück unabhängig davon zu verwenden, in welcher Richtung die Strömung durch den ersten Kanal verläuft, d.h. ob dieser Kanal als eine Zuluftleitung oder als eine Abluftleitung genutzt wird. Auch die nachträgliche Umkehr der Strömungsrichtung ist ohne Nachteile möglich. Nach einer besonders bevorzugten Ausführungsform der Erfindung weist die Drosselklappeneinrichtung des Abzweigstücks zwei, insbesondere symmetrisch, in dem zweiten Kanal angeordnete Drosselklappen auf.

Unter der bevorzugten symmetrischen Ausgestaltung der Drosselklappen wird dabei die insbesondere spiegelsymmetrische Anordnung der Drosselklappen und/oder das Vorsehen von zumindest im Wesentlichen baugleichen Drosselklappen verstanden.

Alternativ oder zusätzlich hierzu wird es bevorzugt, wenn die Drosselklappeneinrichtung zwei synchron zueinander verstellbare Drosselklappen aufweist. So können die Drosselklappen zur Veränderung des in dem zweiten Kanal zur Verfügung stehenden Strömungsquerschnitts gleichzeitig um den gleichen Betrag verschwenkt und/oder verschoben werden.

Eine besonders einfache Ausgestaltung der Drosselklappen sieht vor, dass diese als Scheiben ausgestaltet sind, die jeweils die Kontur des halben Querschnitts des zweiten Kanals haben, wobei die beiden Drosselklappen jeweils über mittig in dem zweiten Kanal angeordnete Schwenkachsen verstellbar sind.

Nach einer strömungstechnisch besonders bevorzugten Ausführungsform ist jede Drosselklappe als ein insbesondere etwa dreieckiges Segment eines rohrartigen Kanals gestaltet, dessen Querschnitt kleiner als der des zweiten Kanals ist. Auch hierbei wird es bevorzugt, wenn die Schwenkachsen der Drosselklappen nebeneinander etwa in der Mitte des zweiten Kanals angeordnet sind. Die Mitte des zweiten Kanals ist dabei die Mitte in Breitenrichtung des zweiten Kanals. Die beiden Drosselklappen können auf zwei zueinander koaxialen oder auf vorzugsweise dicht nebeneinander liegenden Schwenkachse vorgesehen sein.

In Weiterbildung dieses Erfindungsgedankens ist es vorgesehen, dass der Drosselklappeneinrichtung ein Verstellmechanismus zum definierten Verschwenken von Drosselklappen zugeordnet ist. Eine besonders einfache und zuverlässige Ausgestaltung eines solchen Verstellmechanismus umfasst einen Schubriegel sowie eine Gelenkhebelanordnung, die eine axiale Bewegung des Schubriegels, beispielsweise in Richtung des zweiten Kanals, in eine Dreh- oder Schwenkbewegung zum Verstellen von Drosselklappen umsetzt. Der Schubriegel kann dabei manuell und/oder motorisch, d.h. durch ein beliebig gestaltetes Antriebselement, antreibbar sein. Alternativ zu der Gelenkhebelanordnung kann dem Schubriegel auch ein Zahnstangenabschnitt zugeordnet sein, der mit einem Ritzel kämmt, um eine axiale Bewegung in eine rotatorische Bewegung umzusetzen. Bei der Verwendung von zwei nebeneinander oder koaxial verlaufender Schwenkachsen kann es ausreichend sein, eine Gelenkhebelanordnung bzw. eine Zahnstange vorzusehen und zwischen den beiden Schwenkachsen über eine Zahnradverbindung oder dgl. sicherzustellen, dass diese sich in gegenläufigen Richtungen drehen, wenn der Verstellmechanismus betätigt wird. Der Verstellmechanismus kann mit einer Schutzhaube versehen sein, welche sicherstellt, dass die beweglichen Komponenten des Verstellmechanismus in ihrer Funktion nicht beeinträchtigt werden, wenn das Abzweigstück unter Putz verlegt wird.

Nach einer besonders bevorzugten Ausführungsform der Erfindung erstreckt sich die Drosselklappeneinrichtung nicht in den Querschnitt des ersten Kanals hinein. Mit anderen Worten kann unabhängig von der Stellung der Drosselklappeneinrichtung eine Luftströmung den ersten Kanal passieren, ohne dass die Drosselklappeneinrichtung den Querschnitt des ersten Kanals verjüngt. Die erfindungsgemäße Aufteilung der Drosselklappeneinrichtung auf zwei Drosselklappen erlaubt dabei, dass sich die Baulänge des zweiten Kanals besonders klein halten lässt, was insbesondere bei nahe einer Wandoberfläche verlegten Leitungen von Vorteil ist, wenn an dem erfindungsgemäßen Abzweigstück ein Lufteinlass oder -auslass befestigt werden soll. Der zweite Kanal ist vorzugsweise unmittelbar mit einem Lufteinlass oder -auslass verbunden, so dass eine Leitung, in welche das Abzweigstück integriert ist, dicht unter der Oberfläche einer Wand verlegt sein kann. Alternativ hierzu ist es jedoch auch möglich, beispielsweise ein Adapterstück und/oder ein in seiner Länge einstellbares Zwischenstück zwischen dem zweiten Kanal und einem Lufteinlass oder -auslass vorzusehen.

In Weiterbildung des Erfindungsgedankens ist es vorgesehen, dass insbesondere auf der dem zweiten Kanal gegenüberliegenden Seite, in dem ersten Kanal eine Revisionsöffnung vorgesehen ist. Diese Revisionsöffnung ermöglicht die Reinigung des ersten und des zweiten Kanals sowie einen Zugang zu der Drosselklappeneinrichtung. Dabei ist die Revisionsöffnung vorzugsweise durch eine beispielsweise von Hand leicht zu bedienende Revisionsklappe abgedeckt, die den ersten Kanal verschließt.

Für den insbesondere nachträglichen Einbau von Lüftungssystemen in Gebäuden hat es sich als besonders vorteilhaft erwiesen, wenn die Leitungen des Lüftungssystems flach gestaltet sind, d.h. mit einer im Vergleich zu der Breite der Kanäle geringen Höhe. Auch das erfindungsgemäße Abzweigstück ist vorzugsweise derart ausgestaltet, dass die Kanäle einen flachen Querschnitt aufweisen. Dies kann insbesondere ein ovaler oder abgerundet rechteckiger Querschnitt sein.

Die Erfindung ist dabei nicht auf ein T-förmiges Abzweigstück beschränkt. Vielmehr kann die erfindungsgemäße Drosselklappeneinrichtung in einem beliebigen, beispielsweise geraden (I-förmigen), Kanalstück vorgesehen sein, das einen ersten und einen diesem gegenüberliegenden zweiten Anschluss und eine Drosselklappeneinrichtung zur Veränderung des für eine Luftströmung in dem Kanalstück zur Verfügung stehenden Strömungsquerschnitts aufweist, wobei die Drosselklappeneinrichtung zwei, insbesondere symmetrisch, in dem Kanalstück angeordnete und/oder synchron zueinander verstellbare Drosselklappen aufweist. Die Drosselklappen, der Verstellmechanismus sowie der Querschnitt des Kanalstücks können dabei im Wesentlichen wie oben in Bezug auf das Abzweigstück beschrieben ausgestaltet sein.

Die der Erfindung zugrunde liegende Aufgabe wird weiter mit einem Lüftungssystem gelöst, in welches wenigstens ein Kanal- oder Abzweigstück der oben beschriebenen Art integriert ist. Dabei ist das Lüftungssystem mit mehreren Kanälen zur Be- und/oder Entlüftung von Räumen eines Gebäudes versehen, wobei einer oder mehrere der Kanäle (jeweils) als ein Ringkanal mit zwei strömungstechnisch parallel geschalteten Teilkanälen ausgebildet ist. Da der für die Be- und Entlüftung erforderliche Volumenstrom auf die beiden parallelen Teilkanäle des Ringkanals aufgeteilt werden kann, kann jeder dieser Teilkanäle mit einem vergleichsweise kleinen Querschnitt ausgestaltet sein, so dass sich diese Leitungen (Teilkanäle) platzsparend in der Ecke bzw. Kante beispielsweise zwischen Wand und Decke verlegen lassen. Zudem wird eine optimale Frischluftverteilung auf verschiedene Räume einer Wohnung oder einen Teil einer großen Wohnung im Geschosswohnungsbau sichergestellt. Dabei ist es von besonderem Vorteil, dass die Montage aufgrund des geringen baulichen Aufwands auch im bewohnten Zustand ausgeführt werden kann, da die vergleichsweise kleinen Leitungen bzw. Teilkanäle nicht aufwendig in der Wand verlegt werden müssen. Die erfindungsgemäßen (Ring-)Kanäle sind vorzugsweise aus geschlossenen Rohrleitungen und entsprechenden Formstücken zur Steckverbindung modular aufgebaut, das heißt ohne eine sich über die Gesamtlänge erstreckende Kanalöffnung.

Nach einer besonders bevorzugten Ausführungsform der Erfindung ist wenigstens einer der Kanäle derart als ein Ringkanal ausgebildet, dass ein zwischen zwei Luftverteilungspunkten, das heißt beispielsweise zwischen einem Lüftungsgerät und einem Regelverteilerelement bzw. einem Verbindungselement, zu fördernder Luftstrom auf zwei Teilströme aufteilbar ist, die durch zwei parallel geschaltete Abschnitte des Ringkanals durchleitbar sind. Mit anderen Worten wird der durch einen Kanal zu fördernde Luftstrom in zwei Teilströme aufgeteilt, in diesen beiden Teilströmen beispielsweise unterhalb der Decke entlang geleitet und in dem zweiten Luftverteilungspunkt wieder zusammengeführt.

Es wird bevorzugt, wenn mehrere Ringkanäle vorgesehen sind, die jeweils verschiedenen Räumen eines Gebäudes zugeordnet sind. Dabei wird es besonders bevorzugt, wenn in jedem der Räume des Gebäudes, die zu be- oder entlüften sind, wenigstens ein Ringkanal angeordnet ist, der mit einem oder mehreren der Ringkanäle der übrigen Räume in Strömungsverbindung steht.

Hierzu kann ein zentraler Raum, beispielsweise die Diele oder der Flur einer Wohnung, mit einem Ringkanal versehen sein, der als ein Verteilerringkanal ausgebildet ist und wenigstens drei Luftverteilungspunkte aufweist. So kann Frischluft beispielsweise aus einem Versorgungsraum über einen Ringkanal in den Verteilerringkanal in der Diele oder dgl. weitergeleitet werden, von welchem über weitere Luftverteilungspunkte Ringkanäle in den an die Diele angrenzenden Räumen angeschlossen werden. Um eine Wohnung oder ein Gebäude mit Frischluft zu versorgen und verbrauchte Luft abzuleiten, ist ein Versorgungsraum vorgesehen, in welchem ein Lüftungsgerät angeordnet ist, das mit wenigstens einer Zuluftleitung und/oder einer Abluftleitung verbunden ist bzw. mit der Umgebung als Frischluftquelle und Abluftsenke in Verbindung steht. Dieses Lüftungsgerät bildet dabei einen ersten Luftverteilungspunkt. Als ein zweiter Luftverteilungspunkt kann ein Verbindungselement, beispielsweise ein T-förmiges Abzweigstück der oben beschriebenen Art, zur Verbindung zweier Ringkanäle vorgesehen sein. Der Versorgungsraum, in welchem der erste Ringkanal verlegt ist, ist zweckmäßigerweise ein Feuchtraum, wie beispielsweise das Bad, die Küche oder ein WC.

Weitere Luftverteilungspunkte im Sinne der vorliegenden Erfindung können auch Luftein- oder -auslässe sein, denen jeweils ein T-förmiges Abzweigstück der oben beschriebenen Art zugeordnet sein kann und die in die Ringkanäle integriert sein können, um verbrauchte Luft aus den Räumen abzuziehen bzw. Frischluft in diese abzugeben. Hierzu ist das erfindungsgemäße Lüftungssystem vorzugsweise modular aufgebaut und besteht aus einer Vielzahl von steckbaren Elementen oder Formstücken, wie Adaptern, Bogen- und Verteiler- oder T-Stücken. Diese Elemente und Formstücke sind an geeigneter Stelle in die Leitungen der Ringkanäle integrierbar, um an der jeweils optimalen Stelle eine Be- oder Entlüftung vornehmen zu können.

Um eine Entlüftung einiger Räume, beispielsweise der Feuchträume, und eine gleichzeitige Belüftung anderer Räume, beispielsweise Wohn- oder Schlafzimmern zu ermöglichen, wird es bevorzugt, wenn in dem Versorgungsraum wenigstens ein Ringkanal zur Zufuhr von Frischluft aus dem Lüftungsgerät und wenigstens ein weiterer Ringkanal zur Ableitung von verbrauchter Luft in das Lüftungsgerät vorgesehen sind. Abhängig von der Lage und Aufteilung der Räume des Gebäudes können auch weitere Räume mit jeweils einem Ringkanal für die Frischluftzufuhr und einem Ringkanal für die Ableitung von verbrauchter Luft ausgestattet werden.

Die Erfindung wird nachfolgend anhand eines Ausführungsbeispiels und unter Bezugnahme auf die Zeichnung näher erläutert.

Es zeigen schematisch:
- Fig. 1: in Perspektivansicht ein erfindungsgemäßes Abzweigstück,
- Fig. 2: in einer weiteren Perspektivansicht das Abzweigstück nach Fig. 1,
- Fig. 3: in einer weiteren Perspektivansicht das Abzweigstück nach Fig. 1,
- Fig. 4: in Perspektivansicht das Abzweigstück nach Fig. 1 mit entfernter Schutzhaube in seinem geschlossenen Zustand,
- Fig. 5: in Perspektivansicht das Abzweigstück nach Fig. 1 mit entfernter Schutzhaube in seiner geöffneten Position,
- Fig. 6: den Verstellmechanismus des Abzweigstücks nach Fig. 1 und
- Fig. 7: in Perspektivansicht eine Hälfte des Abzweigstücks nach Fig. 1.

Das in den Figuren dargestellte Abzweigstück 1 ist im Wesentlichen durch einen ersten Kanal 2 mit einem ersten Anschluss 3a und einem diesen gegenüberliegenden zweiten Anschluss 3b sowie einen von dem ersten Kanal 2 rechtwinklig abzweigenden zweiten Kanal 4 gebildet, der einen dritten Anschluss 5 aufweist. Wie aus den Figuren ersichtlich ist, sind sowohl der erste Kanal 2 als auch der zweite Kanal 4 jeweils mit einem flachen, näherungsweise ovalen Querschnitt ausgestattet.

In dem zweiten Kanal 4 sind zwei Drosselklappen 6 vorgesehen, welche jeweils über eine Schwenkachse 7 in dem zweiten Kanal 4 drehbar gelagert sind. Die beiden Schwenkachsen 7 sind in Breitenrichtung des zweiten Kanals gesehen etwa mittig und benachbart zueinander angeordnet. Die beiden baugleichen Drosselklappen 6 sind jeweils als ein etwa dreieckiges Segment eines Kanals gestaltet, das entsteht, wenn man einen flachen Kanal von zwei Seiten schräg zu der Längsrichtung des Kanals so einschneidet, dass sich die beiden Schnitte etwa in der Mitte des Kanals treffen.

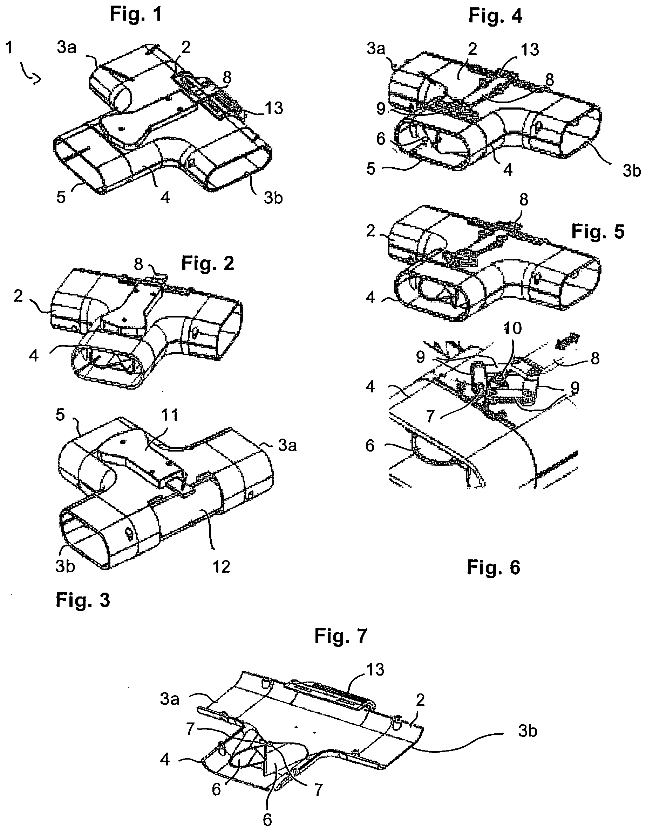

An ihren Spitzen sind die Drosselklappen 6 jeweils starr mit den Schwenkachsen 7 verbunden, so dass bei einer Drehung der Schwenkachsen 7 die Drosselklappen 6 innerhalb des zweiten Kanals 4 verschwenkt werden. In Fig. 4 ist dabei eine geschlossene Position der Drosselklappen 6 gezeigt, in welcher die in Fig. 7 nach links unten weisenden Flächen der Drosselklappen abdichtend aneinander liegen, um den zweiten Kanal 4 zu verschließen. Die gegenüberliegenden Bereiche der Drosselklappen 6 liegen dabei abdichtend an der Innenkontur des zweiten Kanals 4 an. In der in Fig. 5 gezeigten geöffneten Stellung der Drosselklappen 6 sind diese soweit verschwenkt, dass die jeweils den Schwenkachsen 7 abgewandten Bereiche etwa parallel zu der Längsrichtung des zweiten Kanals 4 ausgerichtet sind. Die Position der Schwenkachsen 7 und die Abmessungen der Drosselklappen 6 ist dabei derart gewählt, dass die Drosselklappen 6 in keiner dieser Stellungen in den ersten Kanal 2 hineinragen.

Den Drosselklappen 6 und den Schwenkachsen 7 ist ein in Fig. 6 im Detail gezeigter Verstellmechanismus zugeordnet, über welchen die Position der Drosselklappen 6 definiert verändert werden kann. Dieser Verstellmechanismus weist ein Schubglied 8 auf, welches parallel zu dem zweiten Kanal 4 verschoben werden kann. An dem in Fig. 6 linken Ende des Schubglieds 8 ist eine Gelenkhebelanordnung vorgesehen, die aus jeweils zwei Gelenkhebeln 9 für jede der Schwenkachsen 7 besteht. Die dem Schubglied 8 abgewandten Gelenkhebel 9 sind dabei fest mit einer der Schwenkachsen 7 verbunden, so dass eine axiale Bewegung des Schubglieds 8 über die Gelenkhebel 9 in eine Drehbewegung der Schwenkachsen 7 umgewandelt wird. Ein Anschlag 10 verhindert, dass die Gelenkhebelanordnung in eine vollständig gestreckte Totpunktlage gebracht werden kann, die eine Betätigung des Schubglieds und damit ein Verstellen der Drosselklappen 6 verhindern würde. Der Verstellmechanismus wird durch eine in den Fig. 4 bis 6 weggelassene Schutzhaube 11 abgedeckt, um die mechanischen Komponenten zu schützen, wenn das Abzweigstück 1 in eine Wand integriert und verputzt wird.

In der dem zweiten Kanal 4 gegenüberliegenden Seitenwand des ersten Kanals 2 ist eine Revisionsöffnung 12 vorgesehen, die eine Kontrolle und ggf. Reparatur der Drosselklappen 6 sowie bei Bedarf eine Reinigung des ersten Kanals 2 bzw. des zweiten Kanals 4 ermöglicht. Die Revisionsöffnung 12 ist im Einbauzustand durch eine in Fig. 3 weggelassene Revisionsklappe 13 verschlossen, welche leicht von Hand zu bedienen ist.

Durch den insbesondere auch aus der Darstellung der Fig. 7 ersichtlichen symmetrischen Aufbau des Abzweigstücks 1, welches einen Luftverteiler bildet, kann dieses sowohl für Zuluft als auch für Abluft eingesetzt werden. Mit anderen Worten kann aus dem ersten Kanal 2 Zuluft über den zweiten Kanal 4 in einen Raum eingebracht werden oder es kann alternativ über den zweiten Kanal 4 Abluft aus einem Raum in den ersten Kanal 2 eingebracht werden. Dabei ist die Strömungsrichtung der Zu- oder Abluft innerhalb des ersten Kanals 2 nicht von Bedeutung.

Durch die symmetrische Einstellung des Querschnitts durch das synchrone Verstellen der Drosselklappen 6 entstehen weniger Turbulenzen. Dadurch erzeugt das System weniger Druckverlust und die zugeführte Luft wird gleichmäßig über den Querschnitt verteilt. Ein weiterer Vorteil des erfindungsgemäßen Abzweigstücks 1 ist die dadurch sehr geringe Lärmemission.

In der dargestellten Ausführungsform ist das T-förmige Abzweigstück planar ausgebildet, d.h. der erste Kanal 2 und der zweite Kanal 4 befinden sich in ein und derselben Ebene, wobei das Abzweigstück 1 insbesondere für flache Luftkanäle geeignet ist. Die Regel- oder Drosselklappen 6 sind in dem zweiten Kanal 4, der beispielsweise für den abgehenden Luftstrom vorgesehen ist, angeordnet. Dabei ist das Abzweigstück 1 mit den Drosselklappen 6 so gestaltet, dass ein Luftstrom aus dem ersten Kanal 2 weitgehend unbehindert von beiden Seiten in das Abzweigstück 1 einströmen und aus dem zweiten Kanal 4 ausströmen kann.

Darüber hinaus ist die Bauform des Abzweigstücks 1 besonders kompakt bzw. kurz ausgebildet, so dass eine Platzierung in einer Wand, beispielsweise einer Innenwand oder Trockenbauwand, so möglich ist, dass sich das dem dritten Anschluss 5 abgewandte Ende des zweiten Kanals 4 noch innerhalb der Wand befindet, um einen Luftauslass bzw. -einlass direkt an dem den zweiten Kanal bildenden Schenkel aufzustecken.

## Patentansprüche

1. Kanalstück, insbesondere für ein Lüftungssystem, mit einem ersten und einem diesem gegenüberliegenden zweiten Anschluss (3a, 3b) und mit einer Drosselklappeneinrichtung (6, 7) zur Veränderung des für eine Luftströmung in dem Kanalstück zur Verfügung stehenden Strömungsquerschnitts, wobei die Drosselklappeneinrichtung zwei, insbesondere symmetrisch, in dem Kanalstück angeordnete und synchron zueinander verstellbare Drosselklappen (6) aufweist, **dadurch gekennzeichnet, dass** jede Drosselklappe (6) als, insbesondere etwa dreieckiges, Segment eines rohrartigen Kanals gestaltet ist.

2. Kanalstück nach Anspruch 1, **dadurch gekennzeichnet, dass** jede Drosselklappe (6) an einer senkrecht zu dem Kanalstück verlaufenden Schwenkachse (7) drehbar befestigt ist, wobei die Schwenkachsen (7) der Drosselklappen (6) nebeneinander etwa in der Mitte des Kanalstücks angeordnet sind.

3. Kanalstück nach einem der Ansprüche 1 bis 2, **dadurch gekennzeichnet, dass** der Drosselklappeneinrichtung (6, 7) ein Verstellmechanismus (7, 8, 9) zum definierten Verschwenken von Drosselklappen (6) mit Mitteln zum Umsetzen einer Translationsbewegung in eine Rotationsbewegung zugeordnet ist, oder dass das Kanalstück einen flachen, insbesondere ovalen oder abgerundet rechteckigen, Quer schnitt aufweist.

4. Kanalstück nach einem der vorhergehenden Ansprüche, das als T-förmiges Abzweigstück einen ersten Kanal (2) mit dem ersten und dem diesem gegenüberliegenden zweiten Anschluss (3a, 3b) und mit einem von dem ersten Kanal (2) im Wesentlichen senkrecht abzweigenden zweiten Kanal (4) mit einem dritten Anschluss (5) sowie die Drosselklappeneinrichtung (6, 7) zur Veränderung des für eine Luftströmung zwischen dem ersten Kanal (2) und dem zweiten Kanal (4) zur Verfügung stehenden Strömungsquerschnitts in dem zweiten Kanal (4) aufweist, wobei die Drosselklappeneinrichtung (6, 7) derart gestaltet und angeordnet ist, dass der Luftwiderstand für eine Luftströmung aus dem ersten Anschluss (3a) in den dritten Anschluss (5) gleich dem Luftwiderstand einer Luftströmung aus dem zweiten Anschluss (3b) in den dritten Anschluss (5) ist.

5. Abzweigstück nach Anspruch 4, **dadurch gekennzeichnet, dass** die Drosselklappeneinrichtung zwei, insbesondere symmetrisch, in dem zweiten Kanal (4) angeordnete Drosselklappen (6) aufweist.

6. Abzweigstück nach Anspruch 5, **dadurch gekennzeichnet, dass** jede Drosselklappe (6) an einer senkrecht zu dem ersten und senkrecht zu dem zweiten Kanal (4) verlaufenden Schwenkachse (7) drehbar befestigt ist.

7. Abzweigstück nach Anspruch 6, **dadurch gekennzeichnet, dass** die Schwenkachsen (7) der Drosselklappen (6) nebeneinander etwa in der Mitte des zweiten Kanals (4) angeordnet sind.

8. Abzweigstück nach Anspruch 3 und 4, **dadurch gekennzeichnet, dass** der Verstellmechanismus ein, insbesondere in Richtung des zweiten Kanals (4) verschiebbares, Schubglied (8) sowie eine Gelenkhebelanordnung (9) aufweist, die eine axiale Bewegung des Schubglieds (8) in eine Dreh- oder Schwenkbewegung zum Verstellen von Drosselklappen (6) umsetzt.

9. Abzweigstück nach einem der Ansprüche 4 bis 8, **dadurch gekennzeichnet, dass** die Drosselklappeneinrichtung (6, 7) sich nicht in den Querschnitt des ersten Kanals (2) hinein erstreckt, und/oder
dass, insbesondere auf der dem zweiten Kanal (4) gegenüberliegenden Seite, in dem ersten Kanal (2) eine Revisionsöffnung (12) vorgesehen ist, und/oder dass die Kanäle (2, 4) einen flachen, insbesondere ovalen oder abgerundet rechteckigen, Querschnitt aufweisen, und/oder
dass der zweite Kanal (4) unmittelbar mit einem Lufteinlass oder -auslass verbunden ist.

10. Lüftungssystem mit mehreren Kanälen zur Be- und/oder Entlüftung von Räumen eines Gebäudes, wobei wenigstens einer, insbesondere mehrere, der Kanäle als ein Ringkanal mit zwei strömungstechnisch parallel geschalteten Teilkanälen ausgebildet ist, und wobei in wenigstens einem der Kanäle ein Kanal- oder Abzweigstück (1) nach einem der vorhergehenden Ansprüche vorgesehen ist.

11. Lüftungssystem, insbesondere nach Anspruch 10, wobei in einem Versorgungsraum wenigstens ein erster und ein zweiter Luftverteilungspunkt und wenigstens ein diese verbindender Kanal vorgesehen sind, und in einem weiteren Raum wenigstens ein zweiter Kanal vorgesehen ist, der mit dem zweiten Luftverteilungspunkt und ggf. einem weiteren Luftverteilungspunkt strömungsverbunden ist, **dadurch gekennzeichnet, dass** wenigstens einer, insbesondere mehrere, der Kanäle derart als ein Ringkanal ausgebildet ist, dass ein zwischen zwei Luftverteilungspunkten zu fördernder Luftstrom auf zwei Teilströme aufteilbar ist, die durch zwei parallel geschaltete Abschnitte des Ringkanals durchleitbar sind, wobei wenigstens einem der Luftverteilungspunkte ein Kanal- oder Abzweigstück (1) nach einem der vorhergehenden Ansprüche zugeordnet ist.

## Claims

1. Channel part, particularly for a ventilation system, having a first and a second connector (3a, 3b) opposite said first connector, and having a throttle valve device (6, 7) for varying the flow cross section available in the channel part for an air flow, wherein the throttle valve device has two throttle valves (6) which are arranged in particular symmetrically in the channel part and are adjustable synchronously with each other, **characterized in that** each throttle valve (6) is designed in particular as an approximately triangular segment of a tubular channel.

2. Channel part according to Claim 1, **characterized in that** each throttle valve (6) is mounted rotatably on a pivot axis (7) which extends perpendicularly to the channel part, wherein the pivot axes (7) of the throttle valves (6) are arranged side by side approximately in the middle of the channel part.

3. Channel part according to either of Claims 1 or 2, **characterized in that** an adjustment mechanism (7, 8, 9) for the defined pivoting of throttle valves (6) with means for converting a translational movement into a rotational movement is assigned to the throttle valve device (6, 7), or that the channel part has a cross section which is flat, particularly oval or rectangular with rounded corners.

4. Channel part according to any one of the preceding claims, which as a T-shaped branch part has a first channel (2) with the first and a second connector (3a, 3b) opposite said first connector, and with a second channel (4) branching off substantially perpendicularly from the first channel (2), with a third connector (5) and the throttle valve device (6, 7) for varying the flow cross section available in the second channel (4) for an air flow between the first channel (2) and the second channel (4), wherein the throttle valve device (6, 7) is designed and arranged in such manner that the air resistance for an air flow from the first connector (3a) into the third connector (5) is equal to the air resistance of an air flow from the second connector (3b) into the third connector (5).

5. Branch piece according to Claim 4, **characterized in that** the throttle valve device has two throttle valves (6) which are arranged in particular symmetrically in the second channel (4).

6. Branch piece according to Claim 5, **characterized in that** each throttle valve (6) is mounted rotatably on a pivot axis (7) which extends perpendicularly to the first and perpendicularly to the second channel (4).

7. Branch piece according to Claim 6, **characterized in that** the pivot axes (7) of the throttle valves (6) are arranged side by side approximately in the middle of the second channel (4).

8. Branch piece according to either of Claims 3 or 4 **characterized in that** the adjusting mechanism has a sliding element (8) which is slidable particularly in the direction of the second channel (4), and an articulated lever arrangement (9) which converts an axial movement of the sliding element (8) into a rotating or pivoting movement for adjusting throttle valves (6).

9. Branch piece according to any one of Claims 4 to 8, **characterized in that** the throttle valve means (6, 7) does not extend into the cross section of the first channel (2), and/or an inspection opening (12) is provided in the first channel (2), in particular on the side opposite the second channel, and/or the channels (2, 4) have a flat, in particular oval or rounded rectangular cross-section, and/or the second channel (4) is connected directly to an air inlet or outlet.

10. Ventilation system with multiple channels to allow the inflow and/or outflow of air to or from the rooms of a building, wherein at least one, particularly several of the channels are configures as a ring channel with two sub-channels which are connected in parallel for flow purposes, and wherein a channel part or a branch part (1) according to any one of the preceding claims is provided in at least one of the channels.

11. Ventilation system, particularly according to Claim 10, wherein at least a first and a second air distribution point and at least one channel connecting said distribution points are provided in a supply room, and at least one second channel is provided in another room, which second channel is fluidically connected to the second air distribution point and optionally to a further air distribution point, **characterized in that** at least one, particularly several of the channels are constructed in such manner that an air flow to be moved between two air distribution points can be divided into two sub-flows, which can be passed through two parallel connected sections of the ring channel, wherein one channel part or branch part (1) according to any one of the preceding claims is assigned to at least one of the air distribution points.

## Revendications

1. Pièce de canal, en particulier pour système de ventilation, comprenant un premier raccordement et un deuxième raccordement (3a, 3b) opposé à celui-ci est un dispositif de vanne papillon (6 ,7) pour varier la section transversale d'écoulement disponible pour le flux d'air dans la pièce de canal, le dispositif de vanne papillon présentant deux vannes papillons (6) en particulier disposées symétriquement et réglable de manière synchrone l'une par rapport à l'autre, **caractérisée en ce que** chaque vanne papillon (6) est conçue sous forme d'un segment de canal de type tubulaire, en particulier approximativement triangulaire.

2. Pièce de canal selon la revendication 1, **caractérisée en ce que** chaque vanne papillon (6) est fixée de manière à pouvoir tourner perpendiculairement à l'axe de pivotement (7) orienté vers la pièce de canal, les axes de pivotement (7) des vannes papillon (6) étant disposés les uns à côté des autres approximativement au centre de la pièce de canal.

3. Pièce de canal selon une des revendications 1 à 2, **caractérisée en ce qu'**est associé au dispositif de vanne papillon (6, 7) un mécanisme de réglage (7, 8, 9) permettant un pivotement défini des vannes papillon (6) avec des moyens de transformation d'un mouvement translatoire en un mouvement rotatoire ou que la pièce de canal présente une section transversale plate, en particulier ovale ou rectangulaire arrondie.

4. Pièce de canal selon une des revendications précédentes qui présente, sous forme d'un raccord en forme de T, un premier canal (2) comportant le premier et le deuxième raccordement (3a, 3b) opposé à celui-ci et un deuxième canal (4) bifurquant sensiblement perpendiculairement du premier canal (2) comportant un troisième raccordement (5) et le dispositif de vanne papillon (6, 7) pour varier la section transversale d'écoulement disponible pour un flux d'air entre le premier canal (2) et le deuxième canal (4) dans le deuxième canal (4), le dispositif de vanne papillon (6, 7) étant conçu et disposé de manière à ce que la résistance d'air pour un flux d'air provenant du premier raccordement (3a) dans le troisième raccordement (5) soit égale à la résistance d'air d'un flux d'air provenant du deuxième raccordement (3b) dans le troisième raccordement (5).

5. Raccord selon la revendication 4, **caractérisé en ce que** le dispositif de vanne papillon présente de vannes papillon (6) disposées en particulier symétriquement dans le deuxième canal (4).

6. Raccord selon la revendication 5, **caractérisé en ce que** chaque vanne papillon (6) est fixée de manière à pouvoir tourner à un axe de pivotement (7) orienté perpendiculairement au premier et perpendiculairement au deuxième canal (4).

7. Raccord selon la revendication 6, **caractérisé en ce que** les axes de pivotement (7) des vannes papillon (6) sont disposés les uns près des autres approximativement au centre du deuxième canal (4).

8. Raccord selon les revendications 3 et 4, **caractérisé en ce que** le mécanisme de réglage présente un élément de poussée (8) déplaçable en particulier en direction du deuxième canal (4) et un dispositif de levier articulé (9) qui transforme un mouvement axial de l'élément de poussée (8) en un mouvement de rotation ou de pivotement pour le réglage des vannes papillon (6) .

9. Raccord selon une des revendications 4 à 8, **caractérisé en ce que** le dispositif de vanne papillon (6, 7) ne s'étend pas dans la section transversale du premier canal (2), et/ou
**que**, en particulier sur le côté opposé au deuxième canal (4), dans le premier canal (2), une ouverture de révision (12) est prévue, et/ou
**que** les canaux (2, 4) présentent une section transversale plate, en particulier ovale ou rectangulaire arrondie, et/ou
**que** le deuxième canal (4) est connecté directement à une entrée ou sortie d'air.

10. Système de ventilation comportant plusieurs canaux pour l'aération et/ou la ventilation de pièces d'un bâtiment, dans lequel au moins un, en particulier plusieurs, des canaux sont réalisés sous forme d'un canal annulaire comportant deux sous-canaux branchés parallèlement au niveau de la technique d'écoulement, et il est prévu, dans au moins un des canaux, une pièce de canal ou un raccord (1) selon une des revendications précédentes.

11. Système de ventilation selon la revendication 10, dans lequel il est prévu, dans une chambre d'alimentation, au moins un premier et un second point de répartition d'air et un canal reliant ceux-ci et, dans une autre chambre, au moins un second canal qui est relié au niveau écoulement au second point de répartition d'air et éventuellement à un autre point de répartition d'air, **caractérisé en ce qu'**au moins un, en particulier plusieurs, des canaux est réalisé sous forme d'un canal annulaire tel qu'un flux d'air à transporter entre deux points de répartition d'air puisse être partagé en deux sous-flux qui peuvent être conduits à travers deux sections branchées parallèlement du canal annulaire, étant associé à au moins un des points de répartition d'air une pièce de canal ou un raccord (1) selon une des revendications précédentes.
